# EUROPEAN PATENT SPECIFICATION

(11) **EP 0 685 352 B1**
(45) Date of publication and mention of the grant of the patent: **28.04.1999**
(21) Application number: 95303724.9
(22) Date of filing: 31.05.1995
(51) Int. Cl.: B60C 11/00, B60C 1/00

(54) **Pneumatic vehicle tyre**
Fahrzeugluftreifen
Bandage pneumatique pour véhicule

(30) Priority: 01.06.1994 DE 4419299
(43) Date of publication of application: 06.12.1995
(73) Proprietor: Dunlop GmbH, 63450 Hanau (DE)
(72) Inventor: Erceg, Boris, D-63517 Rodenbach (DE); Ott, Ernst, D-63457 Hanau (DE); Magerle, Wolfgang, D-63526 Erlensee (DE)
(74) Representative: Stewart, Charles Geoffrey

(56) References cited:
- EP-A- 0 104 133
- DE-A- 1 901 448
- DE-A- 2 362 627
- US-A- 4 735 247
- PATENT ABSTRACTS OF JAPAN vol. 011 no. 074 (M-568) ,6 March 1987 & JP-A-61 229602 (OHTSU TIRE & RUBBER CO LTD) 13 October 1986,

## Description

The invention relates to a pneumatic vehicle tyre comprising a carcass, at least one breaker layer which is disposed radially outside the carcass and which is embedded in rubber or rubber-like material and a protector which has a tyre tread, which covers the remaining tyre parts and is towards the outside, is made of rubber or rubber-like material and which, at least from tyre shoulder to tyre shoulder, is made of two connected parts, namely a radially inner lying lower part of the protector and a radially outer lying upper part of the protector.

A tyre in which the road contacting tread comprises at least two components of different rubber compositions is known from EP-A-0104133. In axial cross section this tyre tread has a plurality of circumferentially extending elements of a high hysteresis compound extending taperingly outwardly from the radially inward tread base through a low hysteresis compound. In this configuration both compounds are exposed at the tread surface with the proportion of the high hysteresis compound in contact with the road surface increasing as the tread wears.

Modern pneumatic vehicle tyres need to satisfy a large number of physical requirements, in particular having regard to loads at high speeds and carrying loads over sustained periods. The construction of the tyre must provide a certain stability of form and avoid detachment or delamination effects as a result of loads and fatigue.

A tendency to detach in this way takes place in particular in the transition region between the upper and lower parts of the protector where lateral forces can lead to a shearing off of the two protector parts. Centrifugal forces can then lead to separation in the radial direction.

The object of the invention is therefore to modify a pneumatic vehicle tyre of the initially named kind, such that separation of the lower part and the upper part of the protector is avoided to the greatest possible extent.

According to the invention a pneumatic vehicle tyre comprises a carcass, at least one breaker layer which is disposed radially outside of the carcass and which is embedded in rubber or rubber-like material and a protector which comprises a tyre tread provided with grooves, which covers over the remaining tyre parts towards the outside, which is made of rubber or rubber-like material and which, at least from tyre shoulder to tyre shoulder, is made of two connected parts, namely a radially inner lying lower part of the protector and a radially outer lying upper part of the protector, characterised in that the grooves of the tread are provided entirely within the upper part and the lower part is a single piece and the interface between the upper part and the lower part of the protector lies radially inward of the tread and has a wave-shaped form, with the crests and the troughs of the waves extending in the peripheral direction of the tyre and the tyre is subdivided transversely to its peripheral direction into three regions, namely a central region, a first shoulder region on either side of the central region and a second shoulder region on either side of the first shoulder region, wherein the central region preferably has a width of approximately 0.44 to 0.62 times the tread width, with the first shoulder region extending beyond both lateral ends of the breaker layers of the breaker in each case by a length of between approximately 5 to 20mm, wherein the breaker layer has a breaker width of approximately 0.72 to 1 times the tread width, with the second shoulder region extending in each case up to the end of the two-part region of the protector and the waves of the interface have an approximately sinusoidal form in the first shoulder region and approximately a trapezoidal form in the second shoulder region and the central region, wherein the wavelength in the second shoulder region and the central region is preferably larger than in the first, approximately sinusoidally shaped shoulder region.

The design of the interface in accordance with the invention enlarges the connecting area between the upper and lower parts of the protector compared to a planar interface and, furthermore, provides a form-locked connection between the upper and lower parts of the protector which counteracts shearing off of the two protector parts relative to one another. In this manner, a connection between the two protector parts is provided which is significantly stronger than for known pneumatic vehicle tyres with two-part protectors with planar interfaces.

A sinusoidal form provides a maximum connection area between the upper and lower parts of the protector. A trapezoidal form provides a large connection surface in an advantageous manner which is simple to manufacture.

In accordance with an embodiment of the invention, the amplitude of the wave form can be different transverse to the peripheral direction of the tyre. This allows different requirements to be met in different regions of the pneumatic vehicle tyre.

In particular, in accordance with the invention, the tyre is sub-divided transversely to the peripheral direction into three regions having different forms of interface between the upper and lower parts of the protector, namely a central region, a first shoulder region on either side of the central region and a shoulder region on either side of the first shoulder region, wherein the central region preferably has a width of approximately 0.44-0.62 times the tread width, with the first shoulder region extending beyond both lateral ends of the breaker layers of the breaker in each case via a length of between approximately 5 to 20mm, and with the second shoulder region extending in each case up to the end of the two-part region of the protector. This defines three regions which are different from one another in respect of their requirements on the transition region between the upper and lower parts of the protector.

In the central region, in which the transition between the upper and lower parts of the protector extends approximately in a plane, the requirements are determined in particular by the tyre deformation when running fast. In the first shoulder region, the transition between the upper and lower parts of the protector has an arched shape and bending moments thus arise which represent a load for the connection surface between the upper and lower parts of the protector. Finally, the second shoulder region has the lowest requirements since the transition region between the upper and lower parts of the protector extends approximately in a plane and only slight deformations of the vehicle tyre occur in this region.

The waves in the first shoulder region thus have an approximately sinusoidal form and the waves in the second shoulder region as well as in the central region have an approximately trapezoidal form, since in the first shoulder region a maximum connection surface is required, whereas in the two other regions an interface of trapezoidal waves is often sufficient and thus allows the simple-to-manufacture trapezoidal form to be selected.

In order to achieve a further increase in the connection area between the upper and lower parts of the protector, the wavelength can be reduced and/or the amplitude of the wave of the interface increased - in particular in the first shoulder region. It is thus that the wavelength in the central region and in the second shoulder region is set to be larger than in the first shoulder region.

The smallest thickness of the lower part of the protectors, i.e. the distance between the base of the wave and the radially inner lying delimiting surface of the lower part of the protector, can be the same over the entire tyre or, in accordance with a preferred embodiment of the invention, can vary transversely to the peripheral direction of the tyre. In particular, the smallest thickness of the lower part of the protector can amount to approximately 1.5mm in the central region, to approximately 2.5mm in the first shoulder region and to approximately 1mm in the second shoulder region. This achieves a reliable and secure performance of the protector with a minimum amount of material and weight.

In accordance with a further embodiment of the invention, the upper part of the protector has a dynamic modulus E* of approximately 5 to 8 MPa and a Shore hardness of approximately 60 to 70 ShA and, furthermore, the lower part of the protector has a dynamic modulus E* of approximately 4 to 6 MPa and a Shore hardness of approximately 55 to 65 ShA. These values achieve a secure and reliable performance of the protector.

The invention is described in the following by means of example only with the aid of the Figures which show:
Figure 1 a partial section through a first variant of a pneumatic vehicle tyre;
Figure 2 a partial section through a second variant of a pneumatic vehicle tyre;
Figure 3 a partial section through a third variant of a pneumatic tyre; and
Figure 4 a schematic illustration of the transition region between the upper and lower parts of the protector.

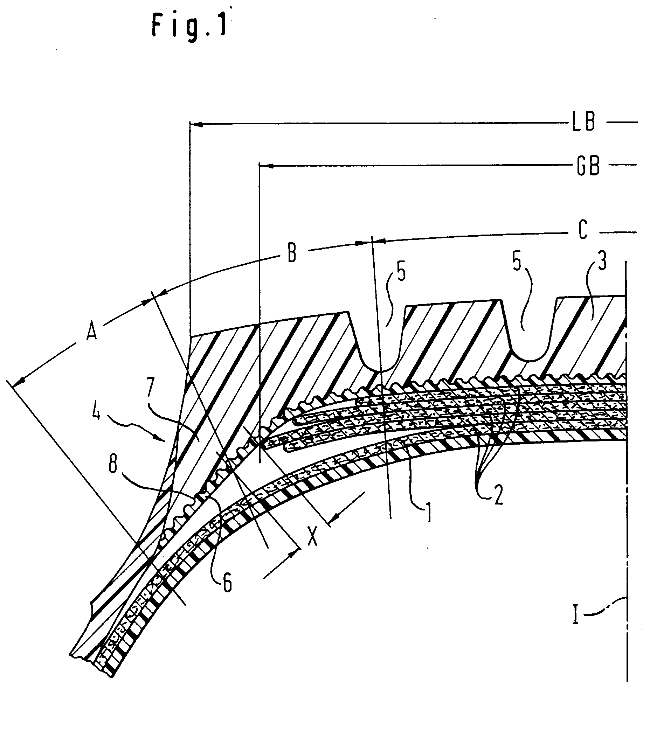

The pneumatic vehicle tyre illustrated in Figures 1 to 3 is constructed mirror symmetrically with respect to the axis I. The tyre comprises a carcass 1, a breaker arranged radially on top of the carcass which is made up of a plurality of breaker plies 2, and a protector 4 bearing the tread 3 of the tyre. Carcass 1 and breaker plies 2 are surrounded by rubber material and are closed off to the outside by the protector 4 which is also made of rubber. Grooves 5 are provided in the tread 3 which form the tread pattern or profile of the pneumatic vehicle tyre.

The protector 4 is constructed in two parts between the two shoulder regions of the tyre and has a radially inner lying lower part 6 and a radially outer lying upper part 7. The respective parts 6 and 7 of the protector are separated from one another by a wave-shaped interface 8. The waves of the interface 8 extend longitudinally in the peripheral direction of the tyre which lies perpendicular to the plane of the drawing.

Three regions A, B and C are indicated in each of the Figures 1 to 3. These regions divide the vehicle tyre up transversely to its peripheral direction. A central region C extends approximately 0.44 to 0.62 times the width LB of the tread (see Figure 1). A first shoulder region B is then connected on either side thereof and, in turn, a second shoulder region A extends axially from each of those. The first shoulder region B extends from the central region C up to approximately 5 to 20mm beyond the lateral limit of the breaker plies 2 of the breaker, the breaker having a breaker width GB of approximately 0.72 to 1 times the width LB of tread. The second shoulder region A extends from the end of the first shoulder region B as far as the protector 4 has a two-part construction.

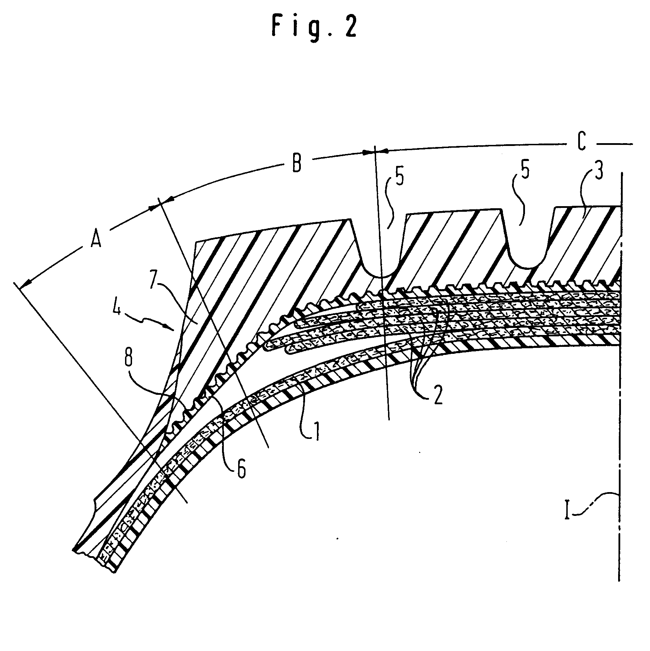

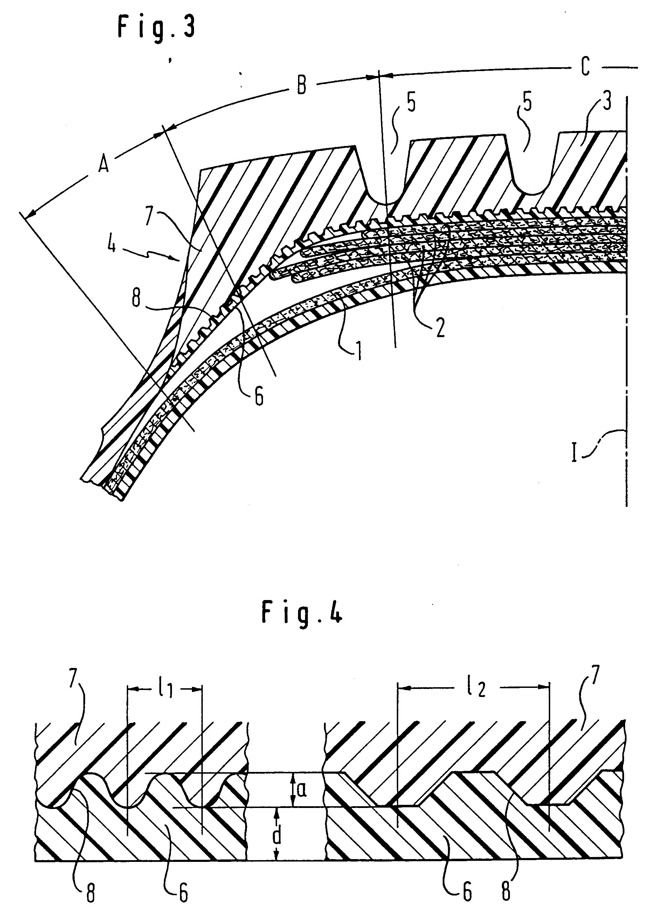

In the variant of Figure 1, the interface 8 has a sinusoidal form in all three regions A, B and C, whereas in the variant of Figure 2 the interface 8 has a sinusoidal form in the two shoulder regions A and B and a trapezoidal form in the central region C. Finally, in the variant of Figure 3, the interface has a trapezoidal form in the two shoulder regions A and B but has a sinusoidal form in the central region C. This design is advantageous for very pronounced loading in the central region of the tread 3. Naturally, other combinations of the interface form in the three regions A, B and C are possible. A combination may also be possible in which a non-wave-shaped region is present, i.e. in a region of lesser load, the interface 8 can also be formed planar.

The meaning of the term smallest thickness d of the lower part 6 of the protector is apparent from the schematic illustration of Figure 4. Similarly, the meaning of amplitude and wavelength of the sinusoidally and trapezoidally shaped waves of the interface 8 are also evident. Whereas in the illustrated embodiment, the amplitude "a" of the two wave forms is the same, the wavelength l₁ of the sinusoidally shaped wave is smaller than the wavelength l₂ if the trapezoidally shaped wave.

The size of the connection surface between the lower and upper parts 6 and 7 of the protector can be adjusted as required by varying the wavelength and amplitude. The amplitude of the wave preferably amounts to approximately 1 to 2mm, the wavelength l₁ of the sinusoidally shaped wave to approximately 1 to 2 times the amplitude and the wavelength l₂ of the trapezoidally shaped wave to approximately 2 to 3 times the amplitude.

Similarly, the smallest thickness d can be selected to match the requirements and can in particular be varied transversely to the peripheral direction of the tyre. The smallest thickness d in the central region C can preferably amount to approximately 1.5mm, in the first shoulder region B to approximately 2.5mm, and in the second shoulder region to approximately 1mm.

The material for the protect is preferably selected so that the upper part of the protector has a dynamic modulus E* of approximately 5 to 8 MPa and a Shore hardness of approximately 60 to 75 ShA and so that the lower part of the protector has a dynamic modulus E* of approximately 4 to 7 MPa and a Shore hardness of approximately 55 to 65 ShA.

The upper and lower parts of the protectors 6 and 7 respectively are joined or adhered together in a conventional manner during the manufacture of the vehicle tyre, the manufacture also being possible in a conventional manner.

As a result of the design of the interface between the lower part 6 and the upper part 7 of the protector in accordance with the invention, a large connection surface is provided for the joining of the two protector parts. Simultaneously, an intermeshing is provided by the wave form, by means of which a kind of form-locked connection is achieved between the lower part 6 and the upper part 7 of the protector. This intermeshing prevents mutually opposing shear force contributions acting on the two protector parts 6 and 7 on either side of the interface 8 from summing together in an undesirable manner.

The largest connection surface is achieved by a sinusoidally shaped wave. However, the manufacture of such a wave is more difficult than that of a trapezoidally shaped wave. In any case, care should be taken to avoid small angles in the wave form since these can lead to material rupture. Account can also be taken of the profile design in the choice of a suitable form for the interface 8 to the extent that it influences the solidity of the connection between the upper and lower parts of the protector.

## Claims

1. A pneumatic vehicle tyre comprising a carcass (1), at least one breaker layer (2) which is disposed radially outside of the carcass and which is embedded in rubber or rubber-like material and a protector (4) which comprises a tyre tread (3) proved with grooves (5), which covers over the remaining tyre parts (1,2) towards the outside, which is made of rubber or rubber-like material and which, at least from tyre shoulder to tyre shoulder, is made of two connected parts, namely a radially inner lying lower part (6) of the protector and a radially outer lying upper part (7) of the protector, characterised in that the grooves (5) of the tread are provided entirely within the upper part and the lower part (6) is a single piece and the interface (8) between the upper part (7) and the lower part (6) of the protector lies radially inward of the tread (3) and has a wave-shaped form, with the crests and the troughs of the waves extending in the peripheral direction of the tyre and the tyre is subdivided transversely to its peripheral direction into three regions (A,B,C), namely a central region (C), a first shoulder region (B) on either side of the central region (C) and a second shoulder region (A) on either side of the first shoulder region (B), wherein the central region (C) preferably has a width of approximately 0.44 to 0.62 times the tread width (LB), with the first shoulder region (B) extending beyond both lateral ends of the breaker layers (2) of the breaker in each case by a length (X) of between approximately 5 to 20mm, wherein the breaker layer has a breaker width GB of approximately 0.72 to 1 times the tread width LB, with the second shoulder region (A) extending in each case up to the end of the two-part region of the protector (4) and the waves of the interface (8) have an approximately sinusoidal form in the first shoulder region (B) and approximately a trapezoidal form in the second shoulder region (A) and the central region (C), wherein the wavelength (1) in the second shoulder region (A) and the central region (C) is preferably larger than in the first, approximately sinusoidally shaped shoulder region (B).

2. A pneumatic vehicle tyre in accordance with claim 1, characterised in that wave amplitude (a) and/or smallest thickness (d) of the lower part (6) of the protector transverse to the peripheral direction of the tyre are different.

3. A pneumatic vehicle tyre in accordance with claim 2, characterised in that the smallest thickness (d) of the lower part of the protector (6) is different in the three regions (A,B,C) and preferably amounts in the middle region (C) to approximately 1.5mm, in the first shoulder region (B) to approximately 2.5mm and in the second shoulder region (A) to approximately 1mm.

4. A pneumatic vehicle tyre in accordance with any one of the preceding claims, characterised in that the upper part of the protector (7) has a dynamic modulus E* of approximately 5 to 8 MPa and a Shore hardness of approximately 60 to 75 ShA and in that the lower part of the protector (6) has a dynamic modulus E* of approximately 4 to 7 MPa and a Shore hardness of approximately 55 to 65 ShA.

## Patentansprüche

1. Fahrzeugluftreifen, umfassend eine Karkasse (1), mindestens eine Gürtellage (2), die radial außerhalb der Karkasse angeordnet ist und die in Kautschuk oder kautschukähnlichem Material eingebettet ist, und einen Protektor (4), der eine Reifenlauffläche (3) umfaßt, die mit Rillen (5) versehen ist, der die restlichen Reifenteile (1, 2) in Richtung zur Außenseite bedeckt, der aus Kautschuk oder kautschukähnlichem Material hergestellt ist, und der mindestens von Reifenschulter zu Reifenschulter aus zwei verbundenen Teilen hergestellt ist, nämlich ein radial innen liegendes, unteres Teil (6) des Protektors und ein radial außen liegendes, oberes Teil (7) des Protektors, dadurch **gekennzeichnet**,
daß die Rillen (5) der Lauffläche vollständig in dem oberen Teil vorgesehen sind, und daß das untere Teil (6) ein einziges Stück ist, und daß die Grenzfläche (8) zwischen dem oberen Teil (7) und dem unteren Teil (6) des Protektors radial innerhalb der Reifenlauffläche (3) liegt und eine Wellenform aufweist, wobei sich die Berge und die Täler der Wellen in der Umfangsrichtung des Reifens erstrecken, und der Reifen quer zu seiner Umfangsrichtung in drei Bereiche (A, B, C) unterteilt ist, nämlich ein zentraler Bereich (C), ein erster Schulterbereich (B) auf beiden Seiten des zentralen Bereichs (C) und ein zweiter Schulterbereich (A) auf einer Seite des ersten Schulterbe-. reichs (B), wobei der zentrale Bereich (C) vorzugsweise eine Breite von näherungsweise dem 0,44 bis 0,62 fachen der Laufflächenbreite (LB) aufweist, wobei der erste Schulterbereich (B) sich über beide Seitenenden der Gürtelschichten (2) des Gürtels hinaus in jedem Fall um eine Länge (X) von zwischen näherungsweise 5 und 20 mm erstreckt, wobei die Gürtelschicht eine Gürtelbreite GB von näherungsweise dem 0,72 bis 1 fachen der Laufflächenbreite LB aufweist, wobei sich der zweite Schulterbereich (A) in jedem Fall bis zum Ende des zweiteiligen Bereiches des Protektors (4) erstreckt, und wobei die Wellen der Grenzfläche (8) eine näherungsweise sinusartige Form in dem ersten Schulterbereich (B) und eine näherungsweise trapezartige Form in dem zweiten Schulterbereich (A) und dem zentralen Bereich (C) aufweisen, wobei die Wellenlänge (1) in dem zweiten Schulterbereich (A) und dem zentralen Bereich (C) vorzugsweise größer als in dem ersten näherungsweise sinusförmigen Schulterbereich (B) ist.

2. Fahrzeugluftreifen nach Anspruch 1,
dadurch **gekennzeichnet**,
daß eine Wellenamplitude (a) und/oder eine kleinste Dicke (d) des unteren Teils (6) des Protektors quer zur Umfangsrichtung des Reifens unterschiedlich sind.

3. Fahrzeugluftreifen nach Anspruch 2,
dadurch **gekennzeichnet**,
daß die kleinste Dicke (d) des unteren Teils des Protektors (6) in den drei Bereichen (A, B, C) unterschiedlich ist und vorzugsweise im mittleren Bereich (C) näherungsweise 1,5 mm beträgt, im ersten Schulterbereich (B) näherungsweise 2,5 mm beträgt, und im zweiten Schulterbereich (A) näherungsweise 1 mm beträgt.

4. Fahrzeugluftreifen nach einem der vorhergehenden Ansprüche,
dadurch **gekennzeichnet**,
daß das obere Teil des Protektors (7) einen dynamischen Modul E* von näherungsweise 5 bis 8 MPa und eine Shore-Härte von näherungsweise 60 bis 75 ShA aufweist, und daß das untere Teil des Protektors (6) einen dynamischen Modul E* von näherungsweise 4 bis 7 MPa und eine Shore-Härte von näherungsweise 55 bis 65 ShA aufweist.

## Revendications

1. Pneumatique pour véhicule, comprenant une carcasse (1), au moins une couche (2) de nappe sommet qui est disposée radialement à l'extérieur de la carcasse et qui est enrobée dans du caoutchouc ou un matériau analogue à du caoutchouc, et un organe protecteur (4) qui comporte une bande de roulement (3) du pneumatique ayant des gorges (5), qui recouvre les parties restantes (1, 2) du pneumatique vers l'extérieur, qui est formé de caoutchouc ou d'un matériau analogue à du caoutchouc et qui, au moins d'un épaulement à l'autre du pneumatique, est formé de deux parties raccordées, c'est-à-dire une partie inférieure radialement interne (6) de l'organe protecteur et une partie supérieure radialement externe (7) de l'organe protecteur, caractérisé en ce que les gorges (5) de la bande de roulement sont formées entièrement à l'intérieur de la partie supérieure, et la partie inférieure (6) est en une seule pièce, et l'interface (8) de la partie supérieure (7) et de la partie inférieure (6) de l'organe protecteur est placée radialement vers l'intérieur de la bande de roulement (3) et a une forme d'ondulation, les crêtes et les creux des ondulations s'étendant dans la direction périphérique du pneumatique et le pneumatique étant subdivisé transversalement à sa direction périphérique en trois régions (A, B, C), à savoir une région centrale (C), une première région d'épaulement (B) de part et d'autre de la région centrale (C), et une seconde région d' épaulement (A) de part et d'autre de la première région d'épaulement (B), dans lequel la région centrale (C) a de préférence une largeur d'environ 0,44 à 0,62 fois la largeur (LB) de la bande de roulement, la première région d'épaulement (B) s'étendant au-delà des extrémités latérales des couches (2) de la nappe sommet dans tous les cas d'une longueur (X) comprise entre environ 5 et 20 mm, dans lequel la couche de nappe sommet a une largeur GB de nappe sommet égale à 0,72 à 1 fois la largeur LB de la bande de roulement, la seconde région d'épaulement (A) s'étendant dans tous les cas jusqu'à l'extrémité de la région en deux parties de l'organe protecteur (4), et les ondulations de l'interface (8) ont une forme approximativement sinusoïdale dans la première région d'épaulement (B) et une forme approximativement trapézoïdale dans la seconde région d' épaulement (A) et la région centrale (C), dans lequel la longueur d'onde (1) dans la seconde région d'épaulement (A) et la région centrale (C) est de préférence supérieure à sa valeur dans la première région d'épaulement (B) de forme approximativement sinusoïdale.

2. Pneumatique pour véhicule selon la revendication 1, caractérisé en ce que l'amplitude (a) d'ondulation et/ou la plus petite épaisseur (d) de la partie inférieure (6) de l'organe protecteur transversalement à la direction périphérique du pneumatique sont différentes.

3. Pneumatique pour véhicule selon la revendication 2, caractérisé en ce que la plus petite épaisseur (d) de la partie inférieure de l'organe protecteur (6) est différente dans les trois régions (A, B, C) et elle est de préférence égale, dans la région médiane (C), à 1,5 mm environ, dans la première région d'épaulement (B) à 2,5 mm environ, et dans la seconde région d'épaulement (A) à 1 mm environ.

4. Pneumatique pour véhicule selon l'une quelconque des revendications précédentes, caractérisé en ce que la partie supérieure de l'organe protecteur (7) a un module dynamique E* d'environ 5 à 8 MPa et une dureté Shore d'environ 60 à 75 ShA, et en ce que la partie inférieure de l'organe protecteur (6) a un module dynamique E* d'environ 4 à 7 MPa et une dureté Shore d'environ 55 à 65 ShA.
